# EUROPEAN PATENT SPECIFICATION

(11) **EP 4 205 841 B1**
(45) Date of publication and mention of the grant of the patent: **11.09.2024**
(21) Application number: 22216732.2
(22) Date of filing: 27.12.2022
(51) Int. Cl.: B01F 27/072

(54) **METHOD AND DEVICE FOR PROCESSING SOLID INORGANIC WASTE**
VERFAHREN UND VORRICHTUNG ZUR VERARBEITUNG VON FESTEN ANORGANISCHEN ABFÄLLEN
PROCÉDÉ ET DISPOSITIF DE TRAITEMENT DE DÉCHETS INORGANIQUES SOLIDES

(30) Priority: 28.12.2021 BE 202106081
(43) Date of publication of application: 05.07.2023
(73) Proprietor: Indaver nv, 9130 Beveren (BE)
(72) Inventor: OPDENAKKER, Stefan, 9130 Beveren (BE)
(74) Representative: Brantsandpatents bv

(56) References cited:
- GB-A- 2 046 111

## Description

### TECHNICAL FIELD

The invention relates to a method and a device for processing solid waste, more particularly solid waste of inorganic composition.

### PRIOR ART

Solid waste with an inorganic composition cannot always simply be landfilled. This waste can be harmful to people and the environment and/or pollute the environment. Examples of such wastes are, for example, fly ash from combustion processes, flue gas purification residues from furnaces, filter cakes from filter installations, catalyst waste, sludge, contaminated soils, etc. This waste often contains heavy metals and anions.

Such waste is often dumped in a landfill. Because this waste still contains harmful and/or polluting components, it is necessary to completely shield the landfill site so that the harmful and/or polluting components cannot penetrate into the soil or, for example, seep away as leachate. These landfills therefore require considerable infrastructure works to be operated safely. Because of the risk that harmful and/or polluting components from the solid waste may seep out of the landfill, they are often immobilized, e.g. in cement or concrete blocks. These blocks are then landfilled, which greatly reduces the risk of seeping leachate with hazardous and/or polluting components. If hazardous and/or polluting components still seep out of the landfill, their concentration will be very low, limiting environmental damage. A disadvantage here is that when manufacturing the cement or concrete blocks, it is complex to homogeneously mix the solid waste with, for example, cement. If the solid waste and the cement are not homogeneously mixed, it is possible that some of the harmful and/or polluting components are not immobilized, so that they can still seep out of the landfill. In addition, cement or concrete blocks are not always easy to pour, which means that a large volume is required.

GB2046111 describes an apparatus for conditioning biologically hazardous waste. The device comprises a reactor tank with a centrally placed agitator shaft therein. Such a device has the disadvantage that waste and binder are not optimally mixed with each other.

The present invention aims to solve at least some of the above problems or drawbacks.

### SUMMARY OF THE INVENTION

In a first aspect, the present invention relates to a method according to claim 1.

This method is particularly advantageous because the reactor tank comprises an upright agitator shaft, which is placed eccentrically in the reactor tank, and because the reactor tank is rotatable about a central axis of rotation, wherein the agitator shaft and the reactor tank are rotated in an opposite sense of rotation. By rotating the reactor tank according to a first sense of rotation and the eccentric placement of the upright agitator shaft, the applied solid inorganic waste and the applied binder are stirred through the agitator tank. By rotating the upright agitator shaft in a second opposite sense of rotation, a circulation is created in the reactor tank wherein the applied solid inorganic waste and the applied binder move in loops from a top of the reactor tank to a bottom of the reactor tank and back. As a result, there is an optimal mixing of the applied solid inorganic waste with the applied binder, so that harmful and/or polluting components are immobilized to the maximum.

Preferred embodiments of the device are shown in claims 2 to 8.

A particular preferred embodiment concerns a method according to claim 4.

This specific preferred embodiment is advantageous because fly ash and/or flue gas purification residues often still contain an excess of lime, so that fly ash and/or flue gas purification residues are suitable as a replacement for a binder such as lime or at least part of a normally required amount of binder such as lime. As a result, binder is saved and fly ash and/or flue gas purification residues are immediately processed as solid inorganic waste.

In a second aspect, the present invention relates to a device according to claim 9.

This device is advantageous for the processing of solid inorganic waste in that the device comprises a reactor tank with an upright agitator shaft, wherein the agitator shaft is placed eccentrically in the reactor tank, and because the reactor tank is rotatable about a central axis of rotation, wherein the agitator shaft and the reactor tank are rotatable in opposite directions. This is advantageous in that, rotation of the reactor tank according to a first sense of rotation and the eccentric placement of the upright agitator shaft enable the applied solid inorganic waste and the applied binder to be stirred through the agitator tank and in that, rotation of the upright agitator shaft in a second opposite sense of rotation can bring about a circulation in the reactor tank wherein the applied solid inorganic waste and the applied binder move in loops from a top of the reactor tank to a bottom of the reactor tank and back. This enables optimum mixing of the applied solid inorganic waste with the applied binder, so that harmful and/or polluting components can be immobilized to the maximum.

Preferred embodiments of the method are described in the dependent claims 10 to 14.

In a third aspect, the present invention relates to a use according to claim 15.

This use results in an advantageous processing of fly ash, flue gas purification residues, filter cakes, catalyst waste, sludge, contaminated soils, residues from flue gas cleaning and salt waste, because harmful and/or polluting components in this solid waste is optimally mixed with a binder and thereby immobilized to the maximum. As a result, the harmful and/or polluting components can no longer seep away or can only seep away in very low concentrations after storage in a landfill. The use is particularly advantageous in the case of fly ash and flue gas purification residues, because the presence of an excess of lime in fly ash and flue gas purification residues saves binder during processing thereof.

### DESCRIPTION OF THE FIGURES

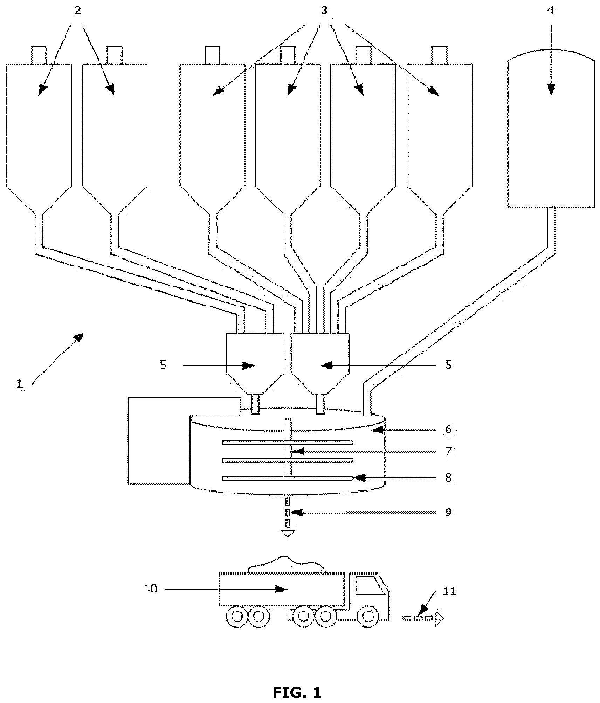

**Figure 1** shows an overview view of a device for processing solid waste with an inorganic composition according to an embodiment of the present invention.

### DETAILED DESCRIPTION

Unless otherwise defined, all terms used in the description of the invention, including technical and scientific terms, have the meaning as commonly understood by a person skilled in the art to which the invention pertains. For a better understanding of the description of the invention, the following terms are explained explicitly.

In the context of this document, immobilized waste is waste material that is pasty [in Dutch: steekvast], where being pasty has been determined in accordance with procedure CMA/2/II/A.4, published in the Belgian Official Gazette on January 27, 2012, and where a shear strength greater than 10 kN/m² has been measured to shift layers of immobilized waste relative to each other.

In a first aspect, the invention relates to a method for processing solid inorganic waste, as defined in claim 1.

Preferred embodiments are defined in the dependent claims.

The solid inorganic waste is preferably introduced into the reactor tank from a storage silo. For this purpose, the storage silo is connected to the reactor tank with at least one conduit.

The binder is preferably introduced into the reactor tank from a storage silo. For this purpose, the storage silo is connected to the reactor tank with at least one conduit. Non-limiting examples of suitable binders are lime and cement. A single binder, such as for example lime or cement, or several binders, such as for example lime and cement, can be placed in the reactor tank. It will be apparent to one skilled in the art that if both lime and cement are applied in the reactor tank, the lime and cement are preferably applied from two different storage silos. The binder is advantageous for mechanically stabilizing solid inorganic waste. Solid inorganic waste that is not pasty is made pasty by adding a suitable amount of binder. Whether or not it is pasty determines whether different layers of solid inorganic waste products shift relative to each other under the influence of a shear force.

Mixing the solid inorganic waste with the binder ensures a homogeneous distribution of the solid inorganic waste and the binder, so that pasty waste is obtained in the entire reactor tank.

The discharge of immobilized waste preferably takes place at the bottom of the reactor tank, for instance along a discharge opening. The immobilized waste is preferably loaded into a truck, so that the immobilized waste can be immediately transported to the landfill and dumped. The truck is, for example, a truck with a tipping loading body or, for example, a tractor with a trailer, wherein the trailer is a tipper.

The reactor tank is preferably a body of revolution, such as a substantially cylindrical body. A body of revolution is a three-dimensional body that is created by revolving a two-dimensional curve around an axis of revolution. The reactor tank is rotatable about a central axis of rotation. In the case of a body of revolution, the central axis of rotation is the axis of revolution. The central axis of rotation is not necessarily a physical axis.

The reactor tank includes an upright agitator shaft. The agitator shaft comprises at least one agitator arm, preferably at least two agitator arms, more preferably at least three agitator arms. The at least one agitator arm extends transverse to the agitator axis. The agitator shaft is placed eccentrically in the reactor tank. Thus, the agitator shaft and the central axis of rotation do not coincide.

The agitator shaft and the reactor tank are rotated in an opposite direction. The reactor tank is rotated around the central axis of rotation in a first sense of rotation. The agitator shaft is rotated about itself in a second sense of rotation, opposite to the first sense of rotation.

By rotating the reactor tank according to the first sense of rotation and the eccentric placement of the upright agitator shaft, the solid inorganic waste and binder are stirred through the agitator tank. By rotating the upright agitator shaft in the second opposite sense of rotation, a circulation is created in the reactor tank wherein the applied solid inorganic waste and the applied binder move in loops from a top of the reactor tank to a bottom of the reactor tank and back. As a result, there is an optimal mixing of the applied solid inorganic waste with the applied binder, so that harmful and/or polluting components are immobilized to the maximum.

According to a preferred embodiment, lime and/or cement is used as binder. Lime and cement are cheap and readily available binders. Lime and/or cement as binder are additionally advantageous for obtaining a suitable acidity (pH) for precipitation or immobilization of heavy metals.

According to a preferred embodiment, the solid inorganic waste is mixed with sludge waste. This is advantageous to obtain a semi-solid mixture of solid inorganic waste and sludge waste, in which the solid inorganic waste is already partially immobilized. This saves on binder. The sludge waste is fed into the reactor tank from a storage silo. This embodiment is particularly advantageous in combination with a previously described embodiment where lime and/or cement is used as binder. Water in the sludge waste is advantageous for reaction with lime and/or cement that is placed in the reactor tank. Lime is also beneficial for combating any odors in the sludge waste. Sludge waste, like solid inorganic waste, must also be pasty for storage in a landfill. By mixing the sludge waste and the solid inorganic waste with lime and/or cement in the reactor tank, both the solid inorganic waste and the sludge are immobilized simultaneously.

According to a preferred embodiment, fly ash and/or flue gas purification residues are introduced into the reactor tank. The fly ash and/or flue gas purification residues are preferably introduced into the reactor tank from a storage silo. For this purpose, the storage silo is connected to the reactor tank with at least one conduit.

This particular embodiment is advantageous because fly ash and/or flue gas purification residues often still contain an excess of lime, so that fly ash and/or flue gas purification residues are suitable as a replacement for a binder such as lime or at least part of a normally required amount of binder such as lime. As a result, binder is saved and fly ash and/or flue gas purification residues are immediately processed as solid inorganic waste.

According to a preferred embodiment, one or more reagents for immobilization of heavy metals and/or anions are placed in the reactor tank. The heavy metals and/or anions are present in the solid inorganic waste or in the sludge from previously described embodiments. The reagents can be either solid additives or liquid additives. The solid additives and the liquid additives are preferably introduced into the reactor tank from a storage silo. For this purpose, the storage silo is connected to the reactor tank with at least one conduit. It will be apparent to one skilled in the art that if solid additives and/or liquid additives are introduced into the reactor tank, each solid additive and/or liquid additive is preferably each introduced from separate storage silos.

By reacting with the reagents, the heavy metals and/or anions precipitate. Precipitation of the heavy metals and/or anions allows the heavy metals and/or anions to be better immobilized. An additional advantage is that the heavy metals and/or anions are hereby converted from harmful and/or polluting components to components that are less (or not) harmful and/or polluting. A non-limiting example is sodium sulfide (Na₂S). Na₂S is suitable for immobilization of metals, causing metals to precipitate.

According to a preferred embodiment, the solid inorganic waste is mixed with the binder for at least 5 seconds and at most 360 seconds.

This embodiment is advantageous for homogeneously mixing the solid inorganic waste with the binder as previously described. The solid inorganic waste is mixed with the binder for a sufficient time to obtain a homogeneous mixture. The solid inorganic waste is mixed with the binder for a very short time, so that a very large volume of solid inorganic waste can be processed per unit of time. An additional advantage is that large blocks of immobilized waste are prevented from being formed in the reactor tank, because the binder does not remain in the reactor vessel long enough to react to form a complete matrix structure, which would otherwise require a lot of volume in a landfill to store the immobilized waste in the landfill. Instead, immobilized waste with a granular structure is obtained.

According to a preferred embodiment, substances are introduced into the reactor tank via one or more hoppers. The hoppers comprise a dosing or weighing system. The hoppers preferably comprise a closable valve.

This embodiment is advantageous for adding raw materials such as lime, cement or another binder, other solid additives and/or liquid additives, but also for instance fly ash and/or flue gas purification residues in the correct quantity to the reactor tank. The amount depends on the amount of solid inorganic waste and/or sludge waste that is placed in the reactor tank. If there is too much binder, a block of immobilized waste is obtained, so that the immobilized waste cannot be properly dumped in a landfill and a large volume is required. If there is a shortage of binder, the solid inorganic waste is insufficiently immobilized and not pasty. A shortage of solid additives and/or liquid additives can, for example, result in insufficient transformation or immobilization of harmful and/or polluting components in the solid inorganic waste, such as the precipitation of heavy metals described above. An excess of solid additives and/or liquid additives leads to an economically inefficient use of solid additives and/or liquid additives.

According to an embodiment, the solid inorganic waste is analyzed for composition before being placed in the reactor tank. This is advantageous for determining possible harmful and/or polluting components in the solid inorganic waste and in what quantity these harmful and/or polluting components are present in the solid inorganic waste. In case the solid inorganic waste is mixed with sludge waste, as in a previously described embodiment, the sludge waste is preferably also analyzed for composition. This embodiment is advantageous for determining a required quantity of binder, such as lime or cement, fly ash, flue gas purification residues, solid additives, liquid additives and/or water, which must be introduced into the reactor tank per unit of weight of the solid inorganic waste. In case the solid inorganic waste is mixed with sludge waste, as in a previously described embodiment, these amounts are preferably determined per unit of weight of the mixture of solid inorganic waste and sludge waste.

According to a preferred embodiment, the immobilized waste are dumped into a truck through a discharge opening at the bottom of the reactor tank. The truck is as in a previously described embodiment. If a truck is not completely filled after dumping the immobilized waste, the truck is moved slightly to dump a next load of immobilized waste in the truck. By moving the truck, the immobilized waste is spread in the truck. As a result, a good filling of the truck is obtained, and afterwards a good filling of the landfill.

According to an embodiment, solid additives and/or liquid additives are introduced into the reactor tank. Non-limiting examples of solid additives and liquid additives are binders and fillers. A non-limiting example of a solid additive is silicates. Silicates are advantageous for additional impermeability of the immobilized waste, which further reduces the chance that immobilized waste can seep away during storage in the landfill. A non-limiting example of a liquid additive is acid solutions. Acid solutions are beneficial for controlling an acidity (pH) of a mixture of solid inorganic waste and a binder, thereby providing a suitable acidity (pH) for precipitation or immobilization of heavy metals.

In a second aspect, the invention relates to a device for processing solid inorganic waste according to claim 9. Preferred embodiments are defined in the dependent claims.

According to a preferred embodiment, the device comprises a storage silo for the solid inorganic waste, a storage silo for a binder and a reactor tank.

Preferably, each storage silo of the device is connected to the reactor tank by at least one conduit.

The reactor tank comprises one or more inlet openings for introducing the solid inorganic waste and binder into the reactor tank. The binder is advantageous for mechanically stabilizing solid inorganic waste. Non-limiting examples of suitable binders are lime and cement. Lime and/or cement are additionally advantageous for obtaining a suitable acidity (pH) for precipitation or immobilization of heavy metals. The reactor tank comprises a discharge opening for discharging immobilized waste. The discharge opening is preferably at the bottom of the reactor tank. This is advantageous for automatic and complete emptying of the reactor tank.

The reactor tank is preferably a body of revolution, such as a substantially cylindrical body. The reactor tank is rotatable about a central axis of rotation. In the case of a body of revolution, the central axis of rotation is the axis of revolution. The central axis of rotation is not necessarily a physical axis. The central axis of rotation is a standing axis. The device preferably comprises an electric motor for rotating the reactor tank. The electric motor is coupled to the central axis of rotation. Alternatively, the device comprises a gear and on a wall of the reactor tank a gear rack, wherein the gear is coupled to the electric motor and wherein the gear meshes with the gear rack. Alternatively, the device comprises a roller, where the roller is coupled to the electric motor, wherein the roller has an axis parallel to the central axis of rotation and the roller pressing against the wall of the reactor tank.

The reactor tank includes an upright agitator shaft. The agitator shaft comprises at least one agitator arm, preferably at least two agitator arms, more preferably at least three agitator arms. The at least one agitator arm extends transverse to the agitator axis. The agitator shaft is placed eccentrically in the reactor tank. Thus, the agitator shaft and the central axis of rotation do not coincide. The agitator shaft and the central axis of rotation are parallel. The agitator shaft is coupled to an electric motor for rotating the agitator shaft. The electric motor may or may not be the aforementioned electric motor for rotating the reactor tank.

The agitator shaft and the reactor tank are rotatable in an opposite sense of rotation. The reactor tank is rotatable about the central axis of rotation in a first sense of rotation. The agitator shaft is rotatable about itself in a second sense of rotation, opposite to the first sense of rotation.

This embodiment is advantageous in that, rotation of the reactor tank according to a first sense of rotation and the eccentric placement of the upright agitator shaft enable the applied solid inorganic waste and the applied binder to be stirred through the agitator tank and in that, rotation of the upright agitator shaft in a second opposite sense of rotation can bring about a circulation in the reactor tank wherein the applied solid inorganic waste and the binder move in loops from a top of the reactor tank to a bottom of the reactor tank and back. This enables optimum mixing of the applied solid inorganic waste with the applied binder, so that harmful and/or polluting components can be immobilized to the maximum.

According to a preferred embodiment, hoppers are placed on the one or more inlet openings of the reactor tank. The hoppers comprise a dosing or weighing system. Previously mentioned conduits between storage silos and the reactor tank are connected to the hoppers. The hoppers preferably comprise a closable valve that closes the inlet openings.

This embodiment is advantageous for adding raw materials such as the binder, for instance lime or cement, solid additives and/or liquid additives, but also for instance fly ash and/or flue gas purification residues in a correct quantity to the reactor tank.

According to a preferred embodiment, the device comprises a storage silo for storing fly ash and/or flue gas purification residues. The storage silo is connected to an inlet opening of the reactor tank by at least one conduit.

This particular embodiment is advantageous because fly ash and/or flue gas purification residues often still contain an excess of lime, so that fly ash and/or flue gas purification residues are suitable as a replacement for a binder such as lime or at least part of a normally required amount of binder such as lime.

According to a preferred embodiment, the device comprises a storage silo for storing sludge waste. The storage silo is connected to an inlet opening of the reactor tank by at least one conduit. Sludge waste is advantageous to obtain a semi-solid mixture of solid inorganic waste and sludge waste, in which the solid inorganic waste is already partially immobilized.

According to an embodiment, the device comprises at least one storage silo for storing solid additives and at least one storage tank for storing liquid additives. The at least one storage silo for solid additives is connected by at least one conduit to an inlet opening of the reactor tank. The at least one storage silo for liquid additives is connected by at least one conduit to an inlet opening of the reactor tank. Non-limiting examples of solid additives and liquid additives are reagents for immobilization of heavy metals and/or anions, binders, fillers and acid solutions.

According to a preferred embodiment, the reactor tank is placed on a bridge above a surface. The surface is, for example, a concrete slab or a street surface. The discharge opening of the reactor tank is at a height of at least 4.20 m above the surface. The discharge opening of the reactor tank is preferably located at a height of at most 5.20 m above the surface.

This embodiment is advantageous for dumping immobilized waste directly through the discharge opening from the reactor tank into a truck. A truck has a maximum height of 4 m. The truck can drive over the surface under the reactor tank. A height of no more than 5.20 m is advantageous to prevent immobilized waste from splashing out of the truck during dumping.

One skilled in the art will appreciate that a method according to the first aspect is preferably performed with a device according to the second aspect and that a device according to the second aspect is preferably configured for performing a method according to the first aspect. Each feature described in this document, both above and below, can therefore relate to any of the three aspects of the present invention.

In a third aspect, the invention relates to a use according to claim 15.

This use results in an advantageous processing of fly ash, flue gas purification residues, filter cakes, catalyst waste, sludge, contaminated soils, residues from flue gas cleaning and salt waste, because harmful and/or polluting components in this solid waste is optimally mixed with a binder and thereby immobilized to the maximum. As a result, the harmful and/or polluting components can no longer seep away or can only seep away in very low concentrations after storage in a landfill. The use is particularly advantageous in the case of fly ash and flue gas purification residues, because due to the presence of an excess of lime in fly ash and flue gas purification residues it is possible to save on binder such as lime as a raw material during processing thereof.

In what follows, the invention is described by way of non-limiting figures illustrating the invention, and which are not intended to and should not be interpreted as limiting the scope of the invention, as defined by the appended claims.

### DESCRIPTION OF THE FIGURES

**Figure 1** shows an overview view of a device for processing solid waste with an inorganic composition according to an embodiment of the present invention.

The device (1) comprises a reactor tank (6). The reactor tank (6) is a closed standing tank. The reactor tank (6) is rotatable about a central axis of rotation. The reactor tank (6) comprises an agitator shaft (7). The agitator shaft (7) comprises several agitator arms (8). The agitator arms (8) are transverse to the agitator shaft (7). The agitator shaft (7) is placed eccentrically in the reactor tank (6). The agitator shaft (7) and the central axis of rotation are parallel. The agitator shaft (7) is rotatable about itself. The device (1) further comprises storage silos for solid additives (2), such as for instance lime, cement and silicates, storage silos (3) for solid inorganic waste and a storage tank for liquid additives (4), such as for instance acid solutions. Each of these storage silos (2) and (3) and storage tank (4) are connected to the reactor tank (6) with a conduit via a hopper with dosing or weighing system (5). The reactor tank (6) comprises a discharge opening (9) at the bottom. Immobilized waste is dumped through the discharge opening (9) into a truck (10), which is placed under the discharge opening (9). The immobilized waste is taken by the truck (10) to a landfill (11), where the immobilized waste is stored.

The elements indicated in the figure are:
1. Device
2. Storage silo for solid additives
3. Storage silo for solid inorganic waste
4. Storage tank for liquid additives
5. Hopper with dosing or weighing system
6. Reactor tank
7. Agitator shaft
8. Agitator arm
9. Discharge opening
10. Truck
11. Landfill

## Claims

1. Method for processing solid inorganic waste comprising:
- placing solid inorganic waste in a closed reactor tank of a processing installation;
- introducing binder into the reactor tank;
- mixing the solid inorganic waste with the binder in the reactor tank;
- discharging immobilized waste from the reactor tank;
- storage of the immobilized waste in a landfill;
wherein the reactor tank comprises an upright agitator shaft, the agitator shaft comprising at least one agitator arm, with the agitator arm extending transverse to the agitator shaft, wherein the agitator shaft and the reactor tank are rotated in an opposite sense of rotation, **characterised in that** said agitator shaft is placed eccentrically in the reactor tank, the reactor tank being rotatable about a central rotational axis.

2. Method according to claim 1, **characterized in, that** lime and/or cement is used as binder.

3. Method according to any of the preceding claims 1-2, **characterized in, that** the solid inorganic waste is mixed with sludge waste.

4. Method according to any of the preceding claims 1-3, **characterized in, that** fly ash and/or flue gas purification residues are introduced into the reactor tank.

5. Method according to any of the preceding claims 1-4, **characterized in, that** one or more reagents for immobilization of heavy metals and/or anions are introduced into the reactor tank.

6. Method according to any of the preceding claims 1-5, **characterized in, that** the solid inorganic waste is mixed with the binder in the reactor tank for at least 5 s and at most 360 s.

7. Method according to any of the preceding claims 1-6, **characterized in, that** substances are introduced into the reactor tank via one or more hoppers, wherein the hoppers comprise a dosing or weighing system.

8. Method according to any of the preceding claims 1-7, **characterized in, that** the immobilized waste is dumped into a truck via a discharge opening at the bottom of the reactor tank.

9. Device for processing solid inorganic waste comprising a storage silo for the solid inorganic waste, a storage silo for binder and a reactor tank, wherein the reactor tank comprises one or more inlet openings for introducing the solid inorganic waste and the binder and wherein the reactor tank comprises a discharge opening for discharging immobilized waste, wherein said reactor tank comprises an upright agitator shaft, the agitator shaft comprising at least one agitator arm, with the agitator arm extending transverse to the agitator shaft, wherein the agitator shaft and the reactor tank are rotatable in an opposite sense of rotation, **characterized in that** said the- agitator shaft is placed eccentrically in the reactor tank, the reactor tank being rotatable about a central axis of rotation.

10. Device according to claim 9, **characterized in, that** the device comprises a storage silo for sludge waste.

11. Device according to claim 9 or 10, **characterized in, that** hoppers are placed on the one or more inlet openings of the reactor tank, wherein the hoppers comprise a dosing or weighing system.

12. Device according to claim 9, 10 or 11, **characterized in, that** the device comprises a storage silo for storing fly ash and/or flue gas purification residues.

13. Device according to any of claims 9-12, **characterized in, that** the device comprises at least one storage tank for storing liquid additives and at least one storage silo for storing solid additives.

14. Device according to any of claims 9-13, **characterized in, that** the reactor tank is placed on a bridge above a surface, wherein the discharge opening is at a height of at least 4.20 m above the surface.

15. Use of a method according to any of claims 1-8 and/or a device according to any of claims 9-14 for processing fly ash, flue gas purification residues, filter cakes, catalyst waste, sludge, contaminated soils, residues from flue gas cleaning and salt waste.

## Patentansprüche

1. Verfahren zum Verarbeiten von anorganischem Feststoffabfall, umfassend:
- Platzieren des anorganischen Feststoffabfalls in einem geschlossenen Reaktortank einer Verarbeitungsanlage,
- Einbringen eines Bindemittels in den Reaktortank,
- Mischen des anorganischen Feststoffabfalls mit dem Bindemittel in dem Reaktortank,
- Ablassen des immobilisierten Abfalls aus dem Reaktortank und
- Lagern des immobilisierten Abfalls auf einer Deponie,
wobei der Reaktortank eine aufrechte Rührwelle umfasst, wobei die Rührwelle mindestens einen Rührarm umfasst, wobei sich der Rührarm quer zu der Rührwelle erstreckt, wobei die Rührwelle und der Reaktortank in entgegengesetzter Drehrichtung gedreht werden, **dadurch gekennzeichnet, dass** die Rührwelle exzentrisch in dem Reaktortank platziert ist, wobei der Reaktortank um eine mittige Drehachse drehbar ist.

2. Verfahren nach Anspruch 1, **dadurch gekennzeichnet, dass** als Bindemittel Kalk und/oder Zement verwendet werden.

3. Verfahren nach einem der vorhergehenden Ansprüche 1 bis 2, **dadurch gekennzeichnet, dass** der anorganische Feststoffabfall mit Klärschlamm gemischt wird.

4. Verfahren nach einem der vorhergehenden Ansprüche 1 bis 3, **dadurch gekennzeichnet, dass** in den Reaktortank Flugasche und/oder Rauchgasreinigungsrückstände eingebracht werden.

5. Verfahren nach einem der vorhergehenden Ansprüche 1 bis 4, **dadurch gekennzeichnet, dass** in den Reaktortank ein oder mehrere Reagenzien zum Immobilisieren von Schwermetallen und/oder Anionen eingebracht werden.

6. Verfahren nach einem der vorhergehenden Ansprüche 1 bis 5, **dadurch gekennzeichnet, dass** der anorganische Feststoffabfall in dem Reaktortank mindestens 5 s und höchstens 360 s lang mit dem Bindemittel gemischt wird.

7. Verfahren nach einem der vorhergehenden Ansprüche 1 bis 6, **dadurch gekennzeichnet, dass** Substanzen über einen oder mehrerer Fülltrichter in den Reaktortank eingebracht werden, wobei die Fülltrichter ein Dosier- oder Wiegesystem umfassen.

8. Verfahren nach einem der vorhergehenden Ansprüche 1 bis 7, **dadurch gekennzeichnet, dass** der immobilisierte Abfall über eine Ablassöffnung am Boden des Reaktortanks in einen Lastkraftwagen geschüttet wird.

9. Vorrichtung zum Verarbeiten von anorganischem Feststoffabfall, ein Lagersilo für den anorganischen Feststoffabfall, ein Lagersilo für Bindemittel und einen Reaktortank umfassend, wobei der Reaktortank eine oder mehrere Einlassöffnungen zum Einbringen des anorganischen Feststoffabfalls und des Bindemittels umfasst und wobei der Reaktortank eine Ablassöffnung zum Ablassen des immobilisierten Abfalls umfasst, wobei der Reaktortank eine aufrechte Rührwelle umfasst, wobei die Rührwelle mindestens einen Rührarm umfasst, wobei sich der Rührarm quer zu der Rührwelle erstreckt, wobei die Rührwelle und der Reaktortank in entgegengesetzter Drehrichtung drehbar sind, **dadurch gekennzeichnet, dass** die Rührwelle exzentrisch in dem Reaktortank platziert ist, wobei der Reaktortank um eine mittige Drehachse drehbar ist.

10. Vorrichtung nach Anspruch 9, **dadurch gekennzeichnet, dass** die Vorrichtung ein Lagersilo für Klärschlamm umfasst.

11. Vorrichtung nach Anspruch 9 oder 10, **dadurch gekennzeichnet, dass** an der einen oder den mehreren Einlassöffnungen des Reaktortanks Fülltrichter platziert sind, wobei die Fülltrichter ein Dosier- oder Wiegesystem umfassen.

12. Vorrichtung nach Anspruch 9, 10 oder 11, **dadurch gekennzeichnet, dass** die Vorrichtung ein Lagersilo zum Lagern von Flugasche und/oder Abgasreinigungsrückständen umfasst.

13. Vorrichtung nach einem der vorhergehenden Ansprüche 9 bis 12, **dadurch gekennzeichnet, dass** die Vorrichtung mindestens einen Lagertank zum Lagern flüssiger Additive und mindestens einen Lagertank zum Lagern fester Additive umfasst.

14. Vorrichtung nach einem der vorhergehenden Ansprüche 9 bis 13, **dadurch gekennzeichnet, dass** der Reaktortank auf einer Brücke über einer Oberfläche platziert ist, wobei sich die Ablassöffnung in einer Höhe von mindestens 4,20 m über der Oberfläche befindet.

15. Verwendung eines Verfahrens nach einem der Ansprüche 1 bis 8 und/oder einer Vorrichtung nach einem der Ansprüche 9 bis 14 zum Verarbeiten von Flugasche, Abgasreinigungsrückständen, Filterkuchen, Katalysatorrückständen, Klärschlamm, kontaminiertem Boden, Rückständen der Abgassäuberung und Salzabfall.

## Revendications

1. Procédé de traitement de déchets inorganiques solides comprenant :
- le placement de déchets inorganiques solides dans une cuve de réacteur fermée d'une installation de traitement ;
- l'introduction d'un liant dans la cuve de réacteur ;
- le mélange des déchets inorganiques solides avec le liant dans la cuve de réacteur ;
- l'évacuation des déchets immobilisés de la cuve de réacteur ;
- le stockage des déchets immobilisés dans une décharge ;
dans lequel la cuve de réacteur comprend un arbre d'agitateur vertical, l'arbre d'agitateur comprenant au moins un bras d'agitateur, avec le bras d'agitateur s'étendant transversalement à l'arbre d'agitateur, dans lequel l'arbre d'agitateur et la cuve de réacteur sont tournés dans un sens de rotation opposé, **caractérisé en ce que** ledit arbre d'agitateur est placé de manière excentrique dans la cuve de réacteur, la cuve de réacteur pouvant tourner autour d'un axe de rotation central.

2. Procédé selon la revendication 1, **caractérisé en ce que** de la chaux et/ou du ciment sont utilisés comme liant.

3. Procédé selon l'une quelconque des revendications précédentes 1 à 2, **caractérisé en ce que** les déchets inorganiques solides sont mélangés avec des déchets de boue.

4. Procédé selon l'une quelconque des revendications précédentes 1 à 3, **caractérisé en ce que** des cendres volantes et/ou des résidus de purification de gaz de combustion sont introduits dans la cuve de réacteur.

5. Procédé selon l'une quelconque des revendications précédentes 1 à 4, **caractérisé en ce qu'**un ou plusieurs réactifs pour l'immobilisation de métaux lourds et/ou d'anions sont introduits dans la cuve de réacteur.

6. Procédé selon l'une quelconque des revendications précédentes 1 à 5, **caractérisé en ce que** les déchets inorganiques solides sont mélangés avec le liant dans la cuve de réacteur pendant au moins 5 s et au plus 360 s.

7. Procédé selon l'une quelconque des revendications précédentes 1 à 6, **caractérisé en ce que** des substances sont introduites dans la cuve de réacteur par l'intermédiaire d'une ou plusieurs trémies, dans lequel les trémies comprennent un système de dosage ou de pesage.

8. Procédé selon l'une quelconque des revendications précédentes 1 à 7, **caractérisé en ce que** les déchets immobilisés sont déversés dans un camion par l'intermédiaire d'une ouverture d'évacuation au fond de la cuve de réacteur.

9. Dispositif de traitement de déchets inorganiques solides comprenant un silo de stockage pour les déchets inorganiques solides, un silo de stockage pour le liant et une cuve de réacteur, dans lequel la cuve de réacteur comprend une ou plusieurs ouvertures d'entrée pour l'introduction des déchets inorganiques solides et du liant et dans lequel la cuve de réacteur comprend une ouverture d'évacuation pour l'évacuation des déchets immobilisés, dans lequel ladite cuve de réacteur comprend un arbre d'agitateur vertical, l'arbre d'agitateur comprenant au moins un bras d'agitateur, avec le bras d'agitateur s'étendant transversalement à l'arbre d'agitateur, l'arbre d'agitateur et la cuve de réacteur peuvent tourner dans un sens de rotation opposé, **caractérisé en ce que** ledit arbre d'agitateur est placé de manière excentrique dans la cuve de réacteur, la cuve de réacteur pouvant tourner autour d'un axe de rotation central.

10. Dispositif selon la revendication 9, **caractérisé en ce que** le dispositif comprend un silo de stockage pour déchets de boue.

11. Dispositif selon la revendication 9 ou 10, **caractérisé en ce que** des trémies sont placées sur les une ou plusieurs ouvertures d'entrée de la cuve de réacteur, dans lequel les trémies comprennent un système de dosage ou de pesage.

12. Dispositif selon la revendication 9, 10 ou 11, **caractérisé en ce que** le dispositif comprend un silo de stockage pour le stockage de cendres volantes et/ou de résidus de purification de gaz de combustion.

13. Dispositif selon l'une quelconque des revendications 9 à 12, **caractérisé en ce que** le dispositif comprend au moins une cuve de stockage pour le stockage d'additifs liquides et au moins un silo de stockage pour le stockage d'additifs solides.

14. Dispositif selon l'une quelconque des revendications 9 à 13, **caractérisé en ce que** la cuve de réacteur est placée sur un pont au-dessus d'une surface, dans lequel l'ouverture d'évacuation est à une hauteur d'au moins 4,20 m au-dessus de la surface.

15. Utilisation d'un procédé selon l'une quelconque des revendications 1 à 8 et/ou d'un dispositif selon l'une quelconque des revendications 9 à 14 pour le traitement de cendres volantes, de résidus de purification de gaz de combustion, de gâteaux de filtration, de déchets de catalyseur, de boues, de sols contaminés, de résidus provenant d'un nettoyage de gaz de combustion et de déchets de sel.
